# EUROPÄISCHE PATENTANMELDUNG

(11) **EP 4 653 391 A1**
(43) Veröffentlichungstag der Anmeldung: **26.11.2025**
(21) Anmeldenummer: 24020159.0
(22) Anmeldetag: 21.05.2024
(51) Int. Cl.: C01B 3/04

(54) **VERFAHREN UND ANLAGE ZUR GEWINNUNG EINES WASSERSTOFF ENTHALTENDEN PRODUKTS UNTER VERWENDUNG VON AMMONIAK**

(71) Anmelder: Linde GmbH, 82049 Pullach (DE)
(72) Erfinder: Heinzel, Albrecht, 82049 Pullach (DE); Götz, Daniel, 82049 Pullach (DE); Müller-Thorwart, Ole, 82049 Pullach (DE); Reinke, Michael, 82049 Pullach (DE)
(74) Vertreter: Fischer, Werner

(57) **Zusammenfassung**

Die Erfindung betrifft ein Verfahren sowie eine Vorrichtung (100) zur Herstellung eines Wasserstoff enthaltenden Produkts, bei dem ein flüssig bereitgestellter Ammoniakeinsatz (1) verdampft und überhitzt wird, um als überhitzter Ammoniakeinsatz (2) mit einer Eintrittstemperatur einem Ammoniakcracker (10) zugeführt zu werden, wo er unter Wärmezufuhr mit katalytischer Unterstützung zu einem Ammoniak sowie Wasserstoff und Stickstoff enthaltenden Spaltgas (3) umgesetzt wird. Kennzeichnend hierbei ist, dass zumindest ein Teil des flüssigen Ammoniakeinsatzes (1, 1a) in einer ersten Wärmeübertragung (21) gegen heiß aus dem Ammoniakcracker (10) abgezogenes Spaltgas (3) verdampft und zu Ammoniaksattdampf (1a, 2a) umgesetzt wird, wobei ein auf eine erste Temperatur abgekühltes Spaltgas entsteht, von dem zumindest ein Teil (3a) in der zweiten Wärmeübertragung (22) dazu eingesetzt wird, um aus wenigstens einem Teil des Ammoniakeinsatzes (1a, 1c) überhitzten Ammoniakdampf (2, 2b) zu erhalten, der als überhitzter Ammoniakeinsatz (2) weitergeführt oder zum überhitzten Ammoniakeinsatz (2) aufbereitet wird.

## Beschreibung

Die Erfindung betrifft ein Verfahren und eine Anlage zur Gewinnung eines Wasserstoff enthaltenden Produkts unter Verwendung von Ammoniak.

### Hintergrund der Erfindung

Die Erzeugung von Wasserstoff enthaltenden Produkten durch katalytisch unterstütze Spaltung von Ammoniak ist bekannt und seit vielen Jahren Stand der Technik. Die bei der Spaltung ablaufende Reaktion

2NH₃ ↔ N₂ + 3H₂

ist endotherm (ΔH=46,2kJ/mol). Die Lage des Gleichgewichts und die Reaktionsgeschwindigkeit hängen stark von Druck und Temperatur sowie von der Art des eingesetzten Katalysators ab. Die Reaktion wird durch niedrigen Druck und hohe Temperatur begünstigt. Um den Aufwand zur Verdichtung des Wasserstoff enthaltenden Produkts gering zu halten, sind höhere Drücke von z.B. 25bar wünschenswert.

Bereits das bei der Spaltung erhalte, Ammoniak, Wasserstoff und Stickstoff umfassende Spaltgas, kann als Produkt abgegeben werden, da es sich beispielsweise als Brenngas eignet. Daneben können auch ein weitgehend aus Wasserstoff und Stickstoff bestehendes, als Formiergas bezeichnetes Gasgemisch oder reiner Wasseroff als Produkte aus dem Spaltgas gewonnen werden. In all diesen Fällen entsteht ein Wasserstoff enthaltendes Produkt unter Verwendung von Ammoniak.

In der Patent- und Nichtpatentliteratur sind unterschiedliche Verfahrenskonzepte und Reaktoren für die Spaltung von Ammoniak in Wasserstoff und Stickstoff beschrieben. Zu weiteren Details wird auf entsprechende Literatur verwiesen, statt vieler beispielsweise auf D. Sima et al., Int. J. Hydrogen Energy 45 (2020) 9342-9352.

Entsprechende Verfahrenskonzepte umfassen eine als Ammoniakcracker bezeichnete Reaktionseinheit, die etwa wie ein Dampfreformer aufgebaut ist. Beispielsweise sei in diesem Zusammenhang auch auf die EP 4 112 539 A1 und die EP 4 112 540 A1 verwiesen.

Im Ammoniakcracker können insbesondere nickelbasierte Katalysatoren bei Spalttemperaturen von bis zu 900°C verwendet werden. Mit einer nur unwesentlich geringeren Temperatur verlässt das Spaltgas den Ammoniakcracker und muss für seine weitere Behandlung abgekühlt werden.

Zum Erhalt von Wasserstoff wird das abgekühlte Spaltgas üblicherweise durch Druckwechseladsorption, wobei auch ein Ammoniak sowie Wasserstoff enthaltendes Restgas anfällt, das beispielsweise zur Befeuerung des Ammoniakcrackers verwendet wird. Zusätzliche Feuerungsleistung kann durch die Verbrennung von reinem Ammoniak bereitgestellt werden. Entsprechende Konzepte eignen sich insbesondere für die Herstellung von Wasserstoff hoher Reinheit.

Nicht zuletzt aus wirtschaftlichen Gründen ist es geboten, die Wärme des Spaltgases durch Wärmeintegration im Verfahren zu nutzen, was aber wegen der hohen Spaltgastemperaturen sehr problematisch ist.

Eine Möglichkeit der Wärmeintegration umfasst die Nutzung eines sog. Feed-Effluent-Wärmeübertragers, mit dem das heiße Spaltgas gegen den dem Ammoniakcracker zugeführten Ammoniakeinsatz abgekühlt wird. Da ein hierfür geeigneter Feed-Effluent-Wärmetauscher mit einem Rohrboden ausgeführt sein muss, der bei Temperaturen von bis zu 900°C dauerhaft stabil und gegenüber Nitridierung unempfindlich ist, kann er aber nur mit hohen Kosten verwirklicht werden.

Eine weitere Möglichkeit besteht darin, einen Apparat ähnlich einem Prozessgaskühler (engl.: process gas cooler, PGC) zu verwenden, wie er beispielsweise standardmäßig bei der industriellen Dampfreformierung Verwendung findet, wobei Wasser im PGC gegen heißes Prozessgas zur Prozessdampferzeugung verdampft wird. In dem betrachteten Verfahrenskonzept würde das Wasser im PGC durch flüssigen Ammoniakeinsatz ersetzt werden, der gegen das heiße Spaltgas verdampft wird. Allerdings reagiert ein PGC nur sehr langsam auf Laständerungen und ist nur zur Erzeugung von Sattdampf in der Lage, aus dem bei einer Druckabsenkung, wie sie etwa in einem dem PGC nachgeschalteten Durchflussregler auftreten würde, eine Flüssigphase auskondensiert, die insbesondere in einem weiter stromabwärts angeordneten Überhitzer zu Problemen führen würde.

Die vorliegende Erfindung stellt sich die Aufgabe, in entsprechenden Verfahren und Anlagen zur Gewinnung eines Wasserstoffprodukts unter Verwendung von Ammoniak die Wärmeintegration zu verbessern.

### Offenbarung der Erfindung

Vor diesem Hintergrund werden ein Verfahren und eine Anlage zur Gewinnung eines wasserstoffhaltigen Produkts mit den Merkmalen der unabhängigen Patentansprüche vorgeschlagen. Ausgestaltungen sind Gegenstand der abhängigen Patentansprüche und der nachfolgenden Beschreibung.

Die Erfindung betrifft ein Verfahren zur Herstellung eines Wasserstoff enthaltenden Produkts, bei dem ein flüssig bereitgestellter Ammoniakeinsatz verdampft und überhitzt wird, um als überhitzter Ammoniakeinsatz mit einer Eintrittstemperatur einem Ammoniakcracker zugeführt zu werden, wo er unter Wärmezufuhr mit katalytischer Unterstützung zu einem Ammoniak sowie Wasserstoff und Stickstoff enthaltenden Spaltgas umgesetzt wird.

Um die Probleme zu überwinden, die sich bei der Wärmeintegration aus den hohen Spaltgastemperaturen von bis zu 900°C ergeben, macht sich die Erfindung die sehr effiziente Übertragbarkeit von Wärme auf eine verdampfende Flüssigkeit zunutze.

Das erfindungsgemäße Verfahren umfasst, dass zumindest ein Teil des flüssigen Ammoniakeinsatzes in einer ersten Wärmeübertragung gegen heiß aus dem Ammoniakcracker abgezogenes Spaltgas verdampft und zu Ammoniaksattdampf umgesetzt wird, wobei ein auf eine erste Temperatur abgekühltes Spaltgas entsteht, von dem zumindest ein Teil in der zweiten Wärmeübertragung dazu eingesetzt wird, um aus wenigstens einem Teil des Ammoniakeinsatzes überhitzten Ammoniakdampf zu erhalten, der als überhitzter Ammoniakeinsatz weitergeführt oder zum überhitzten Ammoniakeinsatz aufbereitet wird.

Vorzugsweise wird hierbei aus dem flüssigen Ammoniakeinsatz ein erster und ein zweiter Teilstrom gebildet, von denen der erste in der ersten Wärmeübertragung gegen das heiß aus dem Ammoniakcracker abgezogene Spaltgas oder einen Teil hiervon verdampft und zu Sattdampf umgewandelt wird, wobei ein auf eine erste Temperatur abgekühltes Spaltgas erhalten wird. In der zweiten Wärmeübertragung wird der zweite Teilstrom des flüssigen Ammoniakeinsatzes gegen das bei der ersten Wärmeübertagung auf die erste Temperatur abgekühlte Spaltgas oder einen Teil hiervon verdampft und überhitzt, so dass ein auf eine zweite Temperatur abgekühltes Spaltgas sowie ein verdampfter und überhitzter zweiter Teilstrom des Ammoniakeinsatzes entstehen, der mit dem in der ersten Wärmeübertragung erhaltenen Sattdampf zum überhitzten Ammoniakeinsatz vereinigt wird.

Ein Teil oder Teilstrom eines Gases ist hier eine durch Aufteilen des Gases gebildete Teilmenge mit denselben Gehalten an Komponenten wie das Ausgangsgas.

Bei einem stationären Betrieb, d.h. wenn die Herstellung des Wasserstoff enthaltenden Produkts bei konstanten Betriebsbedingungen erfolgt, wird bevorzugt in der zweiten Wärmeübertragung nicht mehr des flüssigen Ammoniakeinsatzes verdampft und überhitzt, als dazu benötigt wird, die gesamte, in der ersten Wärmeübertagung parallel erhaltene Sattdampfmenge auf die für den überhitzten Ammoniakeinsatz geforderte Eintrittstemperatur für den Ammoniakcracker zu überhitzen. Dies ermöglicht es, die zweite Wärmeübertragung mit einem Wärmeübertrager durchzuführen, der vergleichsweise klein und leicht ist, so dass schnelle Lastwechsel möglich sind.

In einer Variante des erfindungsgemäßen Verfahrens wird der gesamte flüssige Ammoniakeinsatz in der ersten Wärmeübertragung gegen heiß aus dem Ammoniakcracker abgezogenes Spaltgas verdampft und zu Sattdampf umgewandelt, der in der zweiten Wärmeübertragung gegen das bei der ersten Wärmeübertagung auf die erste Temperatur abgekühlte Spaltgas oder einen Teil hiervon überhitzt wird, so dass ein auf eine zweite Temperatur abgekühltes Spaltgas sowie ein überhitztes Ammoniakgas entstehen.

Vorzugsweise wird der Sattdampf dabei auf eine für den überhitzten Ammoniakeinsatz geforderte Einritrittstemperatur überhitzt. Um zu verhindern, dass insbesondere bei einem Lastwechsel in der zweiten Wärmübertragung nicht genug Wärme bereitgestellt werden kann, um die gesamte, in der ersten Wärmeübertagung gebildete Sattdampfmenge auf die geforderte Eintrittstemperatur für den Ammoniakcracker zu überhitzen, wird vorgeschlagen, einen Teil des in der ersten Wärmeübertragung verdampften Ammoniakeinsatzes einer Trimm-Kühlung zu unterwerfen, um Ammoniak zu kondensieren und zu Regelzwecken vor die erste Wärmeübertragung zurückzuführen. Die Regelung wird dabei so durchgeführt, dass die die Menge des bei der zweiten Wärmeübertragung erhaltenen überhitzen Ammoniakeinsatzes ausreicht, um die verbleibende Sattdampfmenge auf die geforderte Eintrittstemperatur für den Ammoniakcracker zu überhitzen. Zur Trimm-Kühlung des Sattdampfs kann beispielsweise Luft oder Wasser als Kühlmittel eingesetzt werden.

Alternativ oder zusätzlich kann die Temperatur des in der zweiten Wärmeübertagung überhitzt erhaltene Ammoniakgas auch in einer weiteren Wärmeübertragung auf die geforderte Eintrittstemperatur für den Ammoniakcracker erhöht werden.

Aufgrund des guten Wärmeübergangs von einem heißen Gas auf eine siedende Flüssigkeit, können die Temperaturen in einem zur Durchführung der ersten Wärmeübertragung eingesetzten Wärmeübertrager auf Werte begrenzt werden, die eine kosteneffiziente Materialauswahl und ein zuverlässiges mechanisches Design des Wärmeübertragers ermöglichen. Insbesondere Rohren und Rohrböden werden nicht übermäßig hohen Temperaturen ausgesetzt.

Die Abkühlung des Spaltgases auf die erste Temperatur erlaubt es, auch den zur zweiten Wärmeübertragung eingesetzten Wärmeübertrager kostengünstig mit einem zuverlässigen mechanischen Design beispielsweise als Feed-Effluent-Wärmeübertrager auszuführen.

In einer Ausführungsform wird zumindest ein Teil des flüssig zugeführten Ammoniakeinsatzes vor der ersten und/oder der zweiten Wärmeübertragung einer Vorwärmung unterworfen. Die für die Vorwärmung eingesetzte Wärme kann insbesondere dem bei der zweiten Wärmeübertragung auf die zweite Temperatur abgekühlten Spaltgas entzogen werden, das als Heizmedium eigesetzt wird. Sinnvoll kann es auch sein, zumindest einen Teil des flüssig zugeführten Ammoniakeinsatzes als Kühlmittel bei der Trimm-Kühlung zu verwenden. Durch das Vorwärmen kann der Ammoniakeinsatz auf eine vorbestimmte Temperatur gebracht werden, sodass er in der ersten Wärmeübertragung effizient verdampft werden kann. Durch die Verwendung der im Prozess entstehenden Wärme zu Vorwärmung kann die Effizienz des Verfahrens gesteigert werden.

In einer Ausführungsform ist der erste Wärmeübertrager als PGC ausgeführt und weist wenigstens ein Rohrbündel mit zumindest einem Rohrboden und eine feuerfeste ausgekleidete Einlasskammer auf, über die das Spaltgas eingeleitet werden kann, um auf die Rohre des Rohrbündels verteilt zu werden. Dadurch kann verhindert werden, dass der Wärmeübertrager durch das eintretende heiße Spaltgas beschädigt wird.

In einer Ausführungsform sind die Rohre des Rohrbündels des ersten Wärmeübertragers am Einlass des Spaltgases mit Hülsen (Ferrules) zum Schutz des Rohrbodens ausgestattet.

In einer Ausführungsform weist der erste Wärmeübertrager wenigstens eine Bypass-Leitung auf, die zentral durch das Rohrbündel des ersten Wärmeübertragers verläuft. Durch das Verwenden eines Bypasses, kann die Übertragung von Spaltgaswärme auf den Ammoniakeinsatz geregelt werden.

In einer Ausführungsform weist der erste Wärmeübertrager eine Auslasskammer auf, in der das durch das Rohrbündel und den Bypass geleitete Spaltgas zusammengeführt wird.

In einer Ausführungsform wird ein Brenngas zur Erzeugung der dem Ammoniakcracker zugeführten Wärme, oder eines Teils hiervon, verfeuert. Als Brenngas kann insbesondere ein Teil des verdampften und überhitzten Ammoniakeinsatzes verwendet werden. Alternativ oder zusätzlich kann auch flüssiges Ammoniak auf ähnliche Weise, aber unabhängig von dem, dem Ammoniakcracker zugeführten Ammoniakeinsatz zu einem Brenngas verdampft werden. Da das Brenngas gewöhnlich mit einem deutlich geringeren Druck als der Ammoniakeinsatz benötigt wird, kann bereits gegen den Ammoniakeinsatz auf eine zweite Temperatur abgekühltes Spaltgas dazu verwendet werden, um das flüssige Ammoniak in einem ersten Schritt zu verdampfen und in einem zweiten Schritt zu überhitzen, wobei das Spaltgas auf eine dritte und eine vierte Temperatur abgekühlt wird.

In einer Ausgestaltung wird die Ammoniakspaltung in zwei aufeinander folgenden Schritten durchgeführt, die als Vor- und Hauptspaltung bezeichnet werden. Bevorzugt erfolgt die Vorspaltung mit katalytischer Unterstützung ohne Zufuhr von Wärme in einem adiabat betriebenen Vorcracker. Durch die Vorspaltung nimmt der Ammoniakpartialdruck ab, so dass sich die Nitridierungsgefahr verringert und der zur Hauptspaltung eingesetzte Hauptcracker bei höheren Temperaturen betrieben werden kann.

Die Erfindung betrifft weiterhin eine Anlage zur Herstellung eines Wasserstoff enthaltenden Produkts, mit Ammoniakquelle, der ein Ammoniakeinsatz flüssig entnommen werden kann, einer Vorbehandlung zur Verdampfung und Überhitzung des flüssigen Ammoniakeinsatzes, sowie einem Ammoniakcracker, dem der überhitzte Ammoniakeinsatz mit der Eintrittstemperatur zugeführt werden kann, um unter Wärmezufuhr mit katalytischer Unterstützung zu einem Ammoniak sowie Wasserstoff und Stickstoff enthaltenden Spaltgas umgesetzt zu werden.

Die gestellte Aufgabe wird vorrichtungsseitig erfindungsgemäß dadurch gelöst, dass die Vorbehandlung einen ersten Wärmeübertrager, der dazu eingerichtet ist, wenigstens einen Teil des flüssigen Ammoniakeinsatzes gegen zumindest einen Teil des im Ammoniakcracker erhältlichen Spaltgases zu verdampfen und Ammoniaksattdampf sowie ein auf eine erste Temperatur abgekühltes Spaltgas zu erzeugen, sowie einen zweiten Wärmeübertrager aufweist, in dem zumindest ein Teil des auf eine erste Temperatur abgekühlten Spaltgases dazu eingesetzt werden kann, um aus wenigstens einem Teil des Ammoniaksattdampfs überhitzten Ammoniakdampf zu erhalten, der als überhitzter Ammoniakeinsatz weitergeführt oder zum überhitzten Ammoniakeinsatz aufbereitet werden kann.

Zu weiteren Merkmalen und Vorteilen einer entsprechenden Anlage und Ausgestaltungen hiervon sei auf die obigen Erläuterungen betreffend das erfindungsgemäß vorgeschlagene Verfahren und seine Ausgestaltungen ausdrücklich verwiesen, da diese hierfür in gleicher Weise gelten.

Ausgestaltungen der Erfindung werden nachfolgend rein beispielhaft unter Bezugnahme auf die beigefügten Zeichnungen unter Erläuterung des technischen Hintergrunds beschrieben.
Figur 1 veranschaulicht ein Verfahren bzw. eine Anlage gemäß einer Ausgestaltung der vorliegenden Erfindung,
Figur 2 veranschaulicht ein Verfahren bzw. eine Anlage gemäß einer weiteren Ausgestaltung der vorliegenden Erfindung,
Figur 3 veranschaulicht ein Verfahren bzw. eine Anlage gemäß einer weiteren Ausgestaltung der vorliegenden Erfindung,
Figur 4 veranschaulicht ein Verfahren bzw. eine Anlage gemäß einer weiteren Ausgestaltung der vorliegenden Erfindung,
Figur 5 veranschaulicht ein Verfahren bzw. eine Anlage gemäß einer weiteren Ausgestaltung der vorliegenden Erfindung, und
Figur 6 veranschaulicht ein Verfahren bzw. eine Anlage gemäß einer weiteren Ausgestaltung der vorliegenden Erfindung.

### Ausgestaltungen der Erfindung

Die nachfolgend beschriebenen Ausgestaltungen werden lediglich zu dem Zweck beschrieben, den Leser beim Verständnis der beanspruchten und zuvor erläuterten Merkmale zu unterstützen. Sie stellen nur repräsentative Beispiele dar und sollen hinsichtlich der Merkmale der Erfindung nicht abschließend und/oder beschränkend betrachtet werden. Es versteht sich, dass die zuvor und nachfolgend beschriebenen Vorteile, Ausgestaltungen, Beispiele, Funktionen, Merkmale, Strukturen und/oder anderen Aspekte nicht als Beschränkungen des Umfangs der Erfindung, wie er in den Ansprüchen definiert ist, oder als Beschränkungen von Äquivalenten zu den Ansprüchen zu betrachten sind.

Erläuterungen, die sich auf Vorrichtungen, Apparate, Anordnungen, Systeme usw. gemäß Ausgestaltungen der vorliegenden Erfindung beziehen, können auch für Verfahren, Prozesse, Methoden usw. gemäß den Ausgestaltungen der vorliegenden Erfindung gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

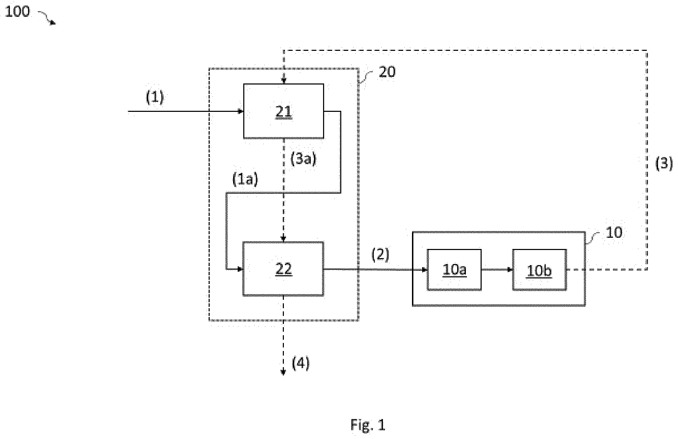

In Figur 1 ist ein Verfahren bzw. eine Anlage gemäß einer Ausgestaltung der vorliegenden Erfindung veranschaulicht. Das Verfahren bzw. die Anlage ist insgesamt mit 100 bezeichnet.

Ein Ammoniakeinsatz 1, beispielsweise aus einem Tank, wird, falls erforderlich, mittels einer Pumpe unter Druck gesetzt und einer Vorbehandlung 20 und anschließend einem Ammoniakcracker 10 zugeführt. In den Figuren sind Ströme des Ammoniakeinsatzes mit durchgezogenen Linien dargestellt. Die Vorbehandlung 20 weist eine erste Wärmeübertragung 21 und eine zweite Wärmeübertragung 22 auf, die beispielsweise durch zwei Wärmeübertrager ausgestaltet sein kann. Dabei wird der Ammoniakeinsatz 1 der ersten Wärmeübertragung 21 zugeführt, in der ein Teil der Wärme eines Spaltgases 3, das im Ammoniakcracker 10 entsteht, unter Erhalt eines teilweise abgekühlten Spaltgases 3a auf den Ammoniakeinsatz 1 übertragen wird, wodurch der Ammoniakeinsatz 1 vorgewärmt und verdampft wird. Der so verdampfte Ammoniakeinsatz 1a wird anschließend der zweiten Wärmeübertagung 22 zugeführt, in der ein Teil der Wärme des teilweise abgekühlten Spaltgases 3a unter Erhalt eines abgekühlten Spaltgases 4 auf den verdampften Ammoniakeinsatz 1a übertragen wird, wodurch dieser überhitzt wird.

Der Ammoniakcracker 10, dem Wärme zugeführt wird, setzt den verdampften und überhitzten Ammoniakeinsatz 2 unter Erhalt eines nicht umgesetztes Ammoniak sowie Wasserstoff und Stickstoff enthaltenden Spaltgases 3 katalytisch um. In den Figuren sind Ströme des Spaltgases mit gestrichelten Linien dargestellt. Das Spaltgas 3 wird anschließend dem ersten Wärmeübertrager 21 zugeführt. Der Ammoniakcracker 10 ist ein zweistufiger Ammoniakcracker 10 mit einem adiabatischen Vorcracker 10a und einem Hauptcracker 10b sein. Im Vorcracker 10a wird der überhitzte Ammoniakeinsatz 2 zumindest teilweise katalytisch ohne Zufuhr von Wärme in ein Zwischenproduktgas umgesetzt, das Stickstoff und Wasserstoff enthält. Anschließend wird das bereits teilweise umgesetzte Zwischenproduktgas dem Hauptcracker 10b zugeführt, in dem das Zwischenproduktgas unter Zufuhr von Wärme weiter katalytisch in das Spaltgas 3 umgewandelt wird. Zwischen dem Vorcracker 10a und dem Hauptcracker 10b kann insbesondere ein Wärmeübertrager zwischengeschaltet sein, der das aus dem Vorcracker 10a austretenden Zwischenproduktgas nochmals auf eine vorbestimmte Temperatur vorwärmt, bevor dieses dem Hauptcracker 10b zugeführt wird

In den weiteren Figuren ist der Ammoniakcracker 10 nicht als zweistufiger Ammoniakcracker gezeigt. Es versteht sich, dass der Ammoniakcracker 10 in jeder der gezeigten Ausgestaltungen als zweistufiger Ammoniakcracker ausgestaltet sein kann.

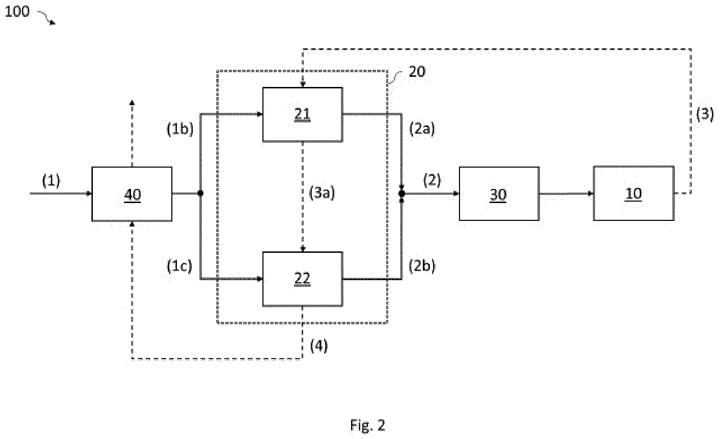

In Figur 2 ist ein Verfahren bzw. eine Anlage gemäß einer Ausgestaltung der vorliegenden Erfindung veranschaulicht. Das Verfahren bzw. die Anlage ist insgesamt mit 100 bezeichnet.

Im Gegensatz zur der in Figur 1 gezeigten Ausgestaltung wird der Ammoniakeinsatz 1 vor der Vorbehandlung 20 einer Vorwärmung 40 zugeführt. In der Vorwärmung 40 wird Wärme des abgekühlten Spaltgases 4 auf den Ammoniakeinsatz 1 übertragen, um diesen vorzuwärmen. Um das Verdampfen mittels des heißen Spaltgases 3 zu verbessern, wird der Ammoniakeinsatz 1 in der Vorwärmung auf eine vorbestimmte Temperatur vorgewärmt.

Weiterhin wird nicht der gesamte Ammoniakeinsatz 1 der ersten Wärmeübertragung 21 zugeführt, sondern nur ein erster Teil des Ammoniakeinsatzes 1b. Der verbleibende zweite Teil des Ammoniakeinsatzes 1c wird der zweiten Wärmeübertragung 22 zugeführt. Im ersten Wärmeübertrager 21 wird der erste Teil des Ammoniakeinsatzes 1b verdampft, während im zweiten Wärmeübertrager 22 der zweite Teil des Ammoniakeinsatzes 1c verdampft und überhitzt wird. Der verdampfte erste Teil des Ammoniakeinsatzes 2a wird anschließend mit dem verdampften und überhitzten zweiten Teil des Ammoniakeinsatzes 2b zu einem verdampften und überhitzten Ammoniakeinsatz 2 zusammengeführt und einer weiteren Überhitzung 30 zugeführt. In der Überhitzung 30 wird der verdampfte und überhitzte Ammoniakeinsatz 2 auf eine für den Ammoniakcracker 10 geforderte Eintrittstemperatur überhitzt und anschließend dem Ammoniakcracker 10 zugeführt.

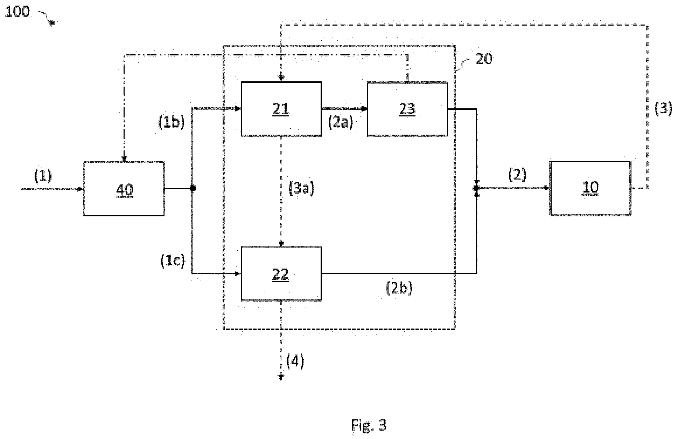

In Figur 3 ist ein Verfahren bzw. eine Anlage gemäß einer weiteren Ausgestaltung der vorliegenden Erfindung veranschaulicht. Das Verfahren bzw. die Anlage ist insgesamt mit 100 bezeichnet.

Im Gegensatz zum Verfahren bzw. der Anlage in Figur 1 oder 2 weist die Vorbehandlung 20 in der Ausgestaltung der Figur 3 weiterhin eine Kühlung 23 auf, in der der verdampfte erste Teil des Ammoniakeinsatzes 2a, bevor dieser mit dem verdampften und überhitzten zweiten Teil des Ammoniakeinsatzes 2b zusammengeführt wird, abkühlt. In der Kühlung 23, die insbesondere eine Trimm-Kühlung ist, die beispielsweise in einem Luft- oder Wasser-Wärmeübertrager durchgeführt werden kann, wird ein Teil des verdampften ersten Ammoniakeinsatzes 2a wieder kondensiert. Ein solches Kondensieren kann in besonderen Betriebsfällen notwendig sein, in denen zu viel des ersten Ammoniakeinsatzes 1b in der ersten Wärmeübertragung 21 verdampft wird. Denkbar ist daher, dass die Kühlung 23 lediglich in solchen Betriebsfällen eingeschaltet wird und das Verfahren während des normalen Betriebs wie in der in Figur 2 gezeigten Ausgestaltung abläuft. Der kondensierte Ammoniakeinsatz wird anschließend wieder der Vorwärmung 40 zugeführt. Der nicht-kondensierte Teil des verdampften ersten Ammoniakeinsatzes 2a wird mit dem zweiten Teil des Ammoniakeinsatzes 2b gemischt und dem Ammoniakcracker 10 zugeführt.

Die bei der Kondensation gewonnene Wärme (Strich-Punkt-Linie) kann beispielsweise für die Vorwärmung 40 des Ammoniakeinsatzes 1 verwendet werden.

Hier soll angemerkt werden, dass, obwohl die Vorwärmung 40 in den Ausgestaltungen der Figur 2 und 3 für den gesamten Ammoniakeinsatz 1 durchgeführt wird, es auch denkbar ist, den ersten und zweiten Teil des Ammoniakeinsatzes 1b, 1c einzeln oder nur einen der beiden Teile vorzuwärmen.

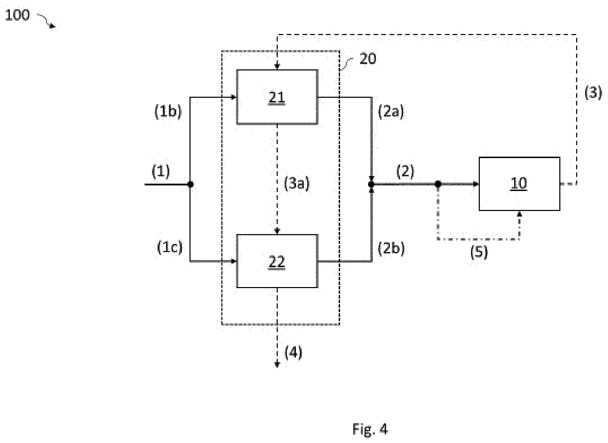

In Figur 4 ist ein Verfahren bzw. eine Anlage gemäß einer weiteren Ausgestaltung der vorliegenden Erfindung veranschaulicht. Das Verfahren bzw. die Anlage ist insgesamt mit 100 bezeichnet.

Zur Bereitstellung von Wärme für den Ammoniakcracker 10 wird ein Brenngas 5 (Strich-Punkt-Linie) verfeuert, bei dem es sich um einen Teil des verdampften und überhitzten Ammoniakeinsatzes 2 handelt. Weiterhin kann der als Brenngas 5 verwendete Teil des verdampften und überhitzten Ammoniakeinsatzes 2 mit einem, bei einer Druckwechseladsorption (nicht gezeigt), die zur Aufreinigung des Spaltgases 3 verwendet wird, entstehendem Restgas gemischt werden, um das Brenngas 5 zu erhalten.

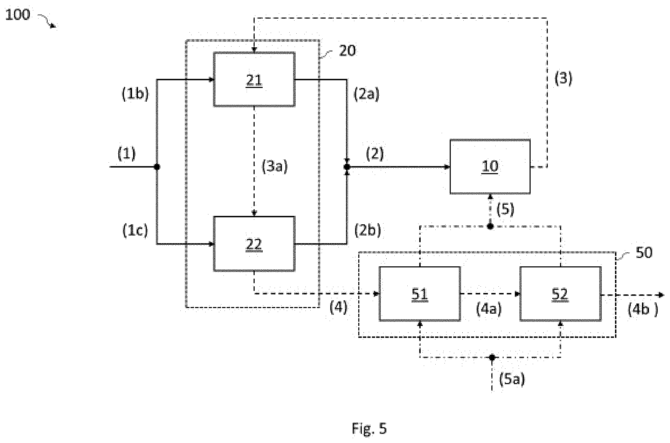

In Figur 5 ist ein Verfahren bzw. eine Anlage gemäß einer weiteren Ausgestaltung der vorliegenden Erfindung veranschaulicht. Das Verfahren bzw. die Anlage ist insgesamt mit 100 bezeichnet. Wie in Figur 4 ist in Figur 5 der Verlauf des Brenngases 5 durch eine Strich-Punkt-Linie dargestellt.

Im Gegensatz zu der in Figur 4 dargestellten Ausgestaltung wird in der in Figur 5 dargestellten Ausgestaltung das Brenngas 5 nicht vom verdampften und überhitzten Ammoniakeinsatz 2 abgezweigt, sondern die Ausgestaltung weist eine separate Brenngasvorbehandlung 50 mit einer dritten und einer vierten Wärmeübertragung 51, 52 auf. Der Brenngaseinsatz 5a, der dritten und vierten Wärmeübertragung 51, 52 zugeführt wird, kann insbesondere aus demselben Tank wie der Ammoniakeinsatz 1 stammen.

Der dritten Wärmeübertragung 51 wird ein erster Teil eines Brenngaseinsatzes 5a und das abgekühlte Spaltgas 4 zugeführt. Ein Teil der Wärme des abgekühlten Spaltgases 4 wird unter Erhalt eines weiter abgekühlten Spaltgases 4a auf den ersten Teil des Brenngaseinsatz 5a übertragen, der zu einem verdampften ersten Teil des Brenngases verdampft wird.

Der vierten Wärmeübertragung 52 werden ein zweiter Teil des Brenngaseinsatzes 5a und das weiter abgekühlte Spaltgas 4a zugeführt und in der vierten Wärmeübertragung 52 wird unter Erhalt eines verdampften und überhitzten zweiten Teils des Brenngases und eines zum Großteil abgekühlten Spaltgases 4b ein Teil der Wärme des teilweise abgekühlten Spaltgases 4a auf den zweiten Teil des Brenngaseinsatzes 5a übertragen.

Die Reihenfolge der dritten und vierten Wärmeübertragung 51, 52 kann dabei auch vertauscht sein, sodass das abgekühlte Spaltgas 4 zunächst der vierten Wärmeübertragung 52 zugeführt wird, in der der zweite Teil des Brenngaseinsatzes 5a erwärmt, verdampft und überhitzt wird, und anschließend das weiter abgekühlte Spaltgas 4a der dritten Wärmeübertragung 51 zugeführt wird, in der der erste Teil des Brenngaseinsatzes 5a verdampft wird.

Der verdampfte erste Teil des Brenngases und der verdampfte und überhitzte zweite Teil des Brenngases werden anschließend zur Erzeugung der dem Ammoniakcracker 10 zugeführten Wärme, oder eines Teils hiervon, zusammengeführt und verfeuert.

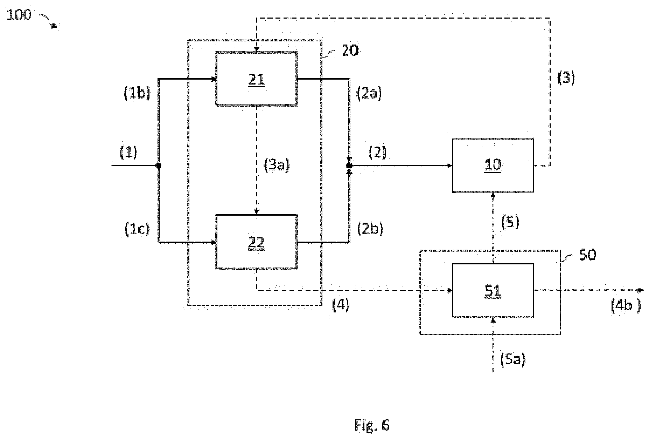

In Figur 6 ist ein Verfahren bzw. eine Anlage gemäß einer weiteren Ausgestaltung der vorliegenden Erfindung veranschaulicht. Das Verfahren bzw. die Anlage ist insgesamt mit 100 bezeichnet. Wie in den Figuren 4 und 5, ist in Figur 6 der Verlauf des Brenngases 5 mit Strich-Punkt-Linien dargestellt.

Im Gegensatz zur Ausgestaltung der Figur 5 wird in der Ausgestaltung der Figur 6 der Brenngaseinsatz 5a nicht aufgeteilt, sondern die Brenngasvorbehandlung 50 weist nur eine Brenngaswärmeübertragung 51 auf, in der der Brenngaseinsatz 5a vorgewärmt, verdampft und überhitzt wird. Dazu wird die Wärme des abgekühlten Spaltgases 4 verwendet, wobei das zum Großteil abgekühlte Spaltgas 4b entsteht.

## Patentansprüche

1. Verfahren (100) zur Herstellung eines Wasserstoff enthaltenden Produkts, bei dem ein flüssig bereitgestellter Ammoniakeinsatz (1) verdampft und überhitzt wird, um als überhitzter Ammoniakeinsatz (2) mit einer Eintrittstemperatur einem Ammoniakcracker (10) zugeführt zu werden, wo er unter Wärmezufuhr mit katalytischer Unterstützung zu einem Ammoniak sowie Wasserstoff und Stickstoff enthaltenden Spaltgas (3) umgesetzt wird, **dadurch gekennzeichnet, dass** zumindest ein Teil des flüssigen Ammoniakeinsatzes (1, 1a) in einer ersten Wärmeübertragung (21) gegen heiß aus dem Ammoniakcracker (10) abgezogenes Spaltgas (3) verdampft und zu Ammoniaksattdampf (1a, 2a) umgesetzt wird, wobei ein auf eine erste Temperatur abgekühltes Spaltgas entsteht, von dem zumindest ein Teil (3a) in der zweiten Wärmeübertragung (22) dazu eingesetzt wird, um aus wenigstens einem Teil des Ammoniakeinsatzes (1a, 1c) überhitzten Ammoniakdampf (2, 2b) zu erhalten, der als überhitzter Ammoniakeinsatz (2) weitergeführt oder zum überhitzten Ammoniakeinsatz (2) aufbereitet wird.

2. Verfahren (100) nach Anspruch 1, bei dem der flüssig bereitgestellte Ammoniakeinsatz (1) in einen ersten und einen zweiten Teil aufgeteilt wird, von denen der erste (1b) in der ersten Wärmeübertragung (21) zu Ammoniaksattdampf (2a) und der zweite (1c) in der zweiten Wärmeübertragung (22) zu überhitzten Ammoniakdampf (2b) umgesetzt wird, von dem zumindest ein Teil mit den Ammoniaksattdampf (2a) zum überhitzten Ammoniakeinsatz (2) gemischt wird.

3. Verfahren (100) nach Anspruch 2, bei dem der verdampfte erste Ammoniakeinsatz (2a) oder ein Teil hiervon einer Kühlung (23) unterworfen wird, um kondensiertes Ammoniak zur Rückführung vor die erste Wärmeübertragung zu erhalten.

4. Verfahren (100) nach Anspruch 3, bei dem die Kühlung (23) eine Trimm-Kühlung ist und insbesondere in einem Luft-Wärmeübertrager oder einem Wasser-Wärmeübertrager durchgeführt wird.

5. Verfahren nach einem der vorhergehenden Ansprüche, bei dem der mit Hilfe fer ersten (21) und der zweiten Wärmeübertragung überhitzt erhaltene Ammoniakeinsatz einer weiteren Überhitzung (30) zugeführt wird, um den überhitzen Ammoniakeinsatz (2) zu erhalten.

6. Verfahren nach einem der vorhergehenden Ansprüche, bei dem der flüssig bereitgestellte Ammoniakeinsatz (1) oder ein Teil vor der ersten und/oder der zweiten Wärmeübertragung einer Vorwärmung (40) unterworfen wird.

7. Verfahren nach Anspruch 6, bei dem die Vorwärmung (40) gegen in der zweiten Wärmeübertragung abgekühltes Spaltgas (4) und/oder Ammoniaksattdampf (2a) erfolgt.

8. Verfahren (100) nach einem der vorhergehenden Ansprüche, bei dem die erste Wärmeübertragung (21) mit Hilfe eines als PGC ausgeführten ersten Wärmeübertrager durchgeführt wird.

9. Verfahren (100) nach Anspruch 8, bei dem der erste Wärmeübertrager eine zentral verlaufende Bypass-Leitung aufweist.

10. Anlage (100) zur Herstellung eines Wasserstoff enthaltenden Produkts, mit Ammoniakquelle, der ein Ammoniakeinsatz (1) flüssig entnommen werden kann, einer Vorbehandlung (20) zur Verdampfung und Überhitzung des flüssigen Ammoniakeinsatzes (1), sowie einem Ammoniakcracker (10), dem der überhitzte Ammoniakeinsatz (2) mit der Eintrittstemperatur zugeführt werden kann, um unter Wärmezufuhr mit katalytischer Unterstützung zu einem Ammoniak sowie Wasserstoff und Stickstoff enthaltenden Spaltgas (3) umgesetzt zu werden, **dadurch gekennzeichnet, dass** die Vorbehandlung (20) einen ersten Wärmeübertrager (21), der dazu eingerichtet ist, wenigstens einen Teil des flüssigen Ammoniakeinsatzes (1) gegen zumindest einen Teil des im Ammoniakcracker (10) erhältlichen Spaltgases (3) zu verdampfen und Ammoniaksattdampf (1a, 2a) sowie ein auf eine erste Temperatur abgekühltes Spaltgas (3a) zu erzeugen, sowie einen zweiten Wärmeübertrager (22) aufweist, in dem zumindest ein Teil des auf eine erste Temperatur abgekühlten Spaltgases (3a) dazu eingesetzt werden kann, um aus wenigstens einem Teil des Ammoniakeinsatzes (1a, 1c) überhitzten Ammoniakdampf (2, 2b) zu erhalten, der als überhitzter Ammoniakeinsatz (2) weitergeführt oder zum überhitzten Ammoniakeinsatz (2) aufbereitet werden kann.

11. Anlage (100) nach Anspruch 11, die dazu eingerichtet ist, ein Verfahren nach einem der Ansprüche 1 bis 9 durchzuführen.
